# EUROPÄISCHE PATENTSCHRIFT

(11) **EP 1 114 256 B1**
(45) Veröffentlichungstag und Bekanntmachung des Hinweises auf die Patenterteilung: **17.07.2002**
(21) Anmeldenummer: 99944511.7
(22) Anmeldetag: 25.08.1999
(51) Int. Cl.: F16B 21/02

(54) **DREHSCHNELLVERSCHLUSS ZUM MITEINANDER VERBINDEN MEHRERER BAUTEILE**
ROTARY QUICK-ACTING CLOSURE FOR INTERCONNECTING A PLURALITY OF STRUCTURAL PARTS
FIXATION ROTATIVE RAPIDE POUR ASSEMBLER PLUSIEURS PIECES

(30) Priorität: 25.08.1998 DE 19838560
(43) Veröffentlichungstag der Anmeldung: 11.07.2001
(73) Patentinhaber: Lisa Dräxlmaier GmbH, 84137 Vilsbiburg (DE)
(72) Erfinder: MEIER, Rudolf, D-94356 Kirchroth (DE)
(74) Vertreter: Stein-Dräger, Christiane
(86) Internationale Anmeldenummer: EP9906232
(87) Internationale Veröffentlichungsnummer: WO0011356

(56) Entgegenhaltungen:
- DE-A- 2 820 218
- DE-A- 4 330 102
- DE-U- 29 804 559
- US-A- 3 956 803

## Beschreibung

### Technisches Gebiet

Die Erfindung betrifft einen Drehschnellverschluß zum miteinander Verbinden mehrerer Bauteile, insbesondere zum Verbinden eines Kraftfahrzeug-Türinnenbleches, eines Aggregateträgers und einer Dekorträgerschale. Der erfindungsgemäße Drehschnellverschluß ist als verdrehbares Halteelement ausgebildet, das einen Kopf- und einen Schaftabschnitt umfaßt.

### Stand der Technik

Schnellverschlüsse der hier interessierenden Art sind insbesondere zum miteinander Verbinden plattenförmiger Bauteile zweckmäßig. Damit können insbesondere modular aufgebaute Kraftfahrzeugtüren schnell montiert werden. Auch eine schnelle Demontage ist hiermit durchführbar. So sind beispielsweise in der DE 195 09 282 A1 oder DE 44 44 406 A1 modular aufgebaute Kraftfahrzeugtüren gezeigt, die mehrere, miteinander zu verbindende Module umfassen. So muß ein Aggregateträger, der auch als Trägerplatte bezeichnet wird, mit daran montierten Funktionseinheiten, wie Fensterheber, Schloß, Kabelbaum oder dergleichen, an einem Türinnenblech montiert werden. Der Aggregateträger deckt einen Ausschnitt des Türinnenblechs ab. An dem Aggregateträger wiederum ist eine Dekorverkleidungsschale anzubringen. Die Dekorverkleidungsschale bzw. Türinnenauskleidung deckt den Aggregateträger innenseitig vollständig ab und ist entsprechend den Innenausstattungsvarianten des Fahrzeuges farblich und materialmäßig angepaßt.

In der bereits erwähnten DE 195 09 282 A1 ist erwähnt, daß Schraub- und Nietverbindungen bzw. Clipse zur Herstellung der Verbindung der einzelnen Teile einsetzbar sind.

Der modulare Aufbau einer Fahrzeugtür hat zwar hinsichtlich der Montage bereits einige Vorteile und Zeitersparnis erbracht, jedoch ist die Befestigung des Aggregateträgers am Türinnenblech immer noch ein Problem. So hat man erste Versuche unternommen, eine als Aggregateträger dienende Kunststoffplatte mittels selbstschneidender Blechschrauben am Türinnenblech zu fixieren. Dies war sowohl hinsichtlich der Zerstörung der Korrosionsschutzschicht des Bleches durch die Verschraubung problematisch wie auch durch die aufwendige Überwachung des Anzugsdrehmomentes während des Montageprozesses. Außerdem waren sehr viele Schraubpunkte notwendig, wodurch eine längere Montagezeit bedingt war. Überdies war eine Vorfixierung der Schrauben der Kunststoffplatte über zusätzliche Teile, wie z.B. Klammern oder Scheiben, notwendig. Schließlich fehlte es auch an einer Möglichkeit, die vorab mit Schrauben bestückte Kunststoffplatte gegenüber dem Türinnenblech vorzufixieren.

Auch eine "Verschiebelösung" hat sich als nicht erfolgreich erwiesen, da eine umlaufende Dichtung zwischen der als Aggregateträger dienenden Platte und dem Türinnenblech auf Scherung beansprucht wurde, was manchmal zu Verformungen der Dichtung führte und damit Undichtigkeiten hervorrufen konnte. Unter Verschiebelösung ist hier zu verstehen, daß an der Platte fest angebrachte Befestigungshaken durch eine Verschiebebewegung der gesamten Platte in oder am Blech eingreifen.

Herkömmliche Cliplösungen, wie sie beispielsweise aus der DE 195 04 692 A1 bekannt sind, sind mit der Gefahr verbunden, daß bei der Montage des Aggregateträgers aufgrund der elastischen Rückstellkraft der umlaufenden Dichtung der Aggregateträger wieder vom Blech zurückspringt. Die umlaufende Dichtung hat nämlich einen Dichtweg von einigen Millimetern. Es kann passieren, daß die Clips daher nicht richtig in ihre Eingriffspositionen im Blech gelangen und es zu einer mangelhaften Befestigung des Aggregateträgers, sowie zu Undichtigkeiten an der umlaufenden Dichtung kommt. Weiterhin kann ein ordnungsgemäßes Einrasten der Clips auch dadurch beeinträchtigt werden, daß durch die axiale Eindrückkraft der Clips örtlich nur das Blech nach hinten weggedrückt wird, ohne daß die Clips in ihre Eingriffspositionen gelangen.
Cliplösungen, die insbesondere einen verbesserten Toleranzausgleich erzielen wollen, sind auch aus der DE 43 34 926 A1 und der DE 43 30 102 C2 bekannt.

Ein weiteres, bisher ungelöstes Befestigungsproblem ist in der, wie bereits erwähnt, notwendigen Dekorträgerschale bzw. Innenverkleidungsschale bedingt. Unter Dekorträgerschale ist jegliches größerflächiges Element zu verstehen, das den Aggregateträger überdeckt und den Türaufbau zum Fahrzeuginnenraum hin abschließt. Es kann beispielsweise aus naturfaserverstärktem Polyurethan bestehen.

Aus der DE 28 20 218 A1 ist bereits ein Befestigungselement zur lösbaren Verbindung von zwei plattenartigen Bauteilen bekannt. Bei diesem Befestigungselement sind unrunde Löcher in den plattenartigen Bauteilen vorhanden, durch die das Befestigungselement hindurchgesteckt wird. Durch Verdrehung des Befestigungselementes werden durch Klemmung die zwei Bauteile zusammenpreßt. Damit ist zwar das Grundprinzip eines durch Verdrehen wirksamen Verbindungs- oder Befestigungselements offenbart, jedoch besteht dann immer noch das Problem, daß ein drittes Bauteil separat befestigt werden muß.

Aus der DE 298 04 559 U1 ist ein Drehschnellverschluß zum mineinander Verbinden mehrerer Bauteile bekannt. Der Drehschnellverschluß ist als verdrehbares Halteelement ausgebildet, das einen Kopf- und einen Schaftabschnitt umfasst. Am Schaftaußenumfang des Schaftabschnitts ist ein Klemmvorsprung vorhanden, wobei der Klemmvorsprung eine dem Kopfabschnitt zugewandte Anlageflanke zur Anlage an das erste Bauteil besitzt. Diese Flanke ist gegenüber der Schaftachse zumindest über einen Teilbereich geneigt. Der Kopfabschnitt weist eine Anlagefläche zur Anlage an ein zweites Bauteil auf. Die Bauteile werden zwischen der Anlageflanke des Klemmvorsprungs und der Anlagefläche des Kopfabschnitts durch Drehung des Halteelements eingeklemmt. Ein zweites Befestigungselement ist einstückig mit den Halteelement ausgebildet.

### Darstellung der Erfindung

Das der Erfindung zugrundeliegende technische Problem besteht darin, einen verbesserten Drehschnellverschluß bereitzustellen, der die Montage mehrerer Bauteile vereinfacht.

Dieses technische Problem wird durch einen Drehschnellverschluß mit den Merkmalen des Anspruchs 1 gelöst.

Der Erfindung liegt der Gedanke zugrunde, erstmals einen vom Prinzip her bekannten Drehverschluß als Befestigungspunkt für ein weiteres Bauelement auszubilden. Durch den erfindungsgemäßen Drehschnellverschluß sind grundsätzlich zwei oder mehr Bauteile, insbesondere plattenförmige Bauteile, wie ein Aggregateträger und ein Türinnenblech, fest miteinander verbindbar. Diese feste Verbindung wird dadurch erzielt, daß durch das Verdrehen des Halteelementes die Bauteile zwischen ansteigenden Anlageflanken und einer gegenüberliegenden Anlagefläche eingeklemmt werden. Hierbei ist jedoch nur eine geringe Drehung notwendig, um den Klemmsitz der Bauteile zu erzielen. Das Halteelement wird dabei bei der Montage zunächst durch die zu verbindenden Bauteile hindurchgeführt, bis die ansteigenden Anlageflanken beide Bauteile von der Rückseite her hintergreifen. Erst durch die Drehung des Halteelementes werden die beiden Bauteile, die dann vom Halteelement sicher hintergriffen sind, zunehmend geklemmt und wird eine ggf. vorhandene umlaufende Dichtung zwischen den Bauteilen komprimiert. So werden die eingangs beschriebenen Probleme bei herkömmlicher Cliplösung vermieden. Gleichzeitig schafft das erfindungsgemäß ausgebildete verdrehbare Halteelement einen Befestigungssitz für ein weiteres Befestigungselement, mit dem ein weiteres Bauteil, hier insbesondere eine Dekorträgerschale bzw. Türinnenverkleidung, an dem bereits zusammengesetzten Plattenverbund aus erstem und zweiten Bauteil anbringbar ist, ohne daß hierzu in einem oder beiden Bauteilen weitere Befestigungslöcher oder dergleichen notwendig sind.

Vorteilhafterweise ist das Halteelement mit einem Aufnahmehohlraum versehen, der an zumindest einer Halteelementstirnseite offen und zur Befestigung eines zweiten Befestigungselementes ausgebildet ist. An dem zweiten Befestigungselement kann dann ein weiteres Bauteil befestigt werden. Als zweites Befestigungselement kommen insbesondere an sich bekannte Rastelemente zur Befestigung des weiteren Bauteils zum Einsatz. Es ist natürlich aber auch denkbar, daß das zweite Befestigungselement mit dem Halteelement einteilig ausgebildet ist, so daß nochmals ein weiterer Montagevorgang eingespart werden kann. In diesem Fall muß kein Hohlraum vorhanden sein, sondern nur das Halteelement an der einen Seite wie ein Rastclip ausgebildet sein, so daß daran die Dekorträgerschale angehängt oder allgemein befestigt werden kann.

Eine vorteilhafte Ausführungsform eines erfindungsgemäßen Drehverschlusses weist zwei bezüglich der Schaftachse einander gegenüberliegende Klemmvorsprünge am Schaftabschnitt auf. Damit ist zum einen ein gleichmäßiger Kraftverlauf bei der Klemmung der Bauteile erzielbar. Zum anderen ist aber auch in einem der Bauteile eine einfache Langloch-Ausbildung oder ein Loch mit Durchmesserübermaß ausreichend. Es ist selbstverständlich auch möglich, mehr als zwei Klemmvorsprünge am Schaftabschnitt vorzusehen. Es muß dann nur gewährleistet sein, daß diese durch ein entsprechendes Loch in den Bauteilen durchführbar sind und in verdrehter Stellung eine Abstützfläche haben. Beispielsweise kann das Loch sternförmig ausgebildet sein und eine entsprechende Verteilung von Klemmvorsprüngen am Schaftabschnitt vorhanden sein.

Insbesondere ist es vorteilhaft, daß jeder Klemmvorsprung einen eine Steigung zwischen 1° und 45° aufweisenden, geneigten Flankenbereich und einen ebenen, keine Steigung aufweisenden Flankenbereich besitzt. Durch diese Ausbildung ist es dann möglich, daß entsprechend der Steigung und dem Drehwinkel der Dicht- oder Preßweg wie auch die Klemmkraft auf die zwei Bauteile einstellbar ist. Durch die ebenen Flankenbereiche ist das Losdrehmoment entsprechend der hierdurch vorgegebenen Reibfläche festlegbar.

Sehr vorteilhaft ist eine Ausbildung, bei der am Schaftaußenumfang des Schaftabschnittes eine oder mehrere Nocken oder Rastnasen vorhanden sind, die in entsprechend ausgebildete Rastausnehmungen in dem ersten oder zweiten Bauteil passen. Durch eine derartige Ausbildung kann das Halteelement in einem der Bauteile vorfixiert werden, was die Montage äußerst erleichtert. Außerdem können hierdurch eine Öffnungs- bzw. Einsetzposition wie auch eine Schließstellung festgelegt werden. Dies ist wiederum erzielbar, indem am Schaftaußenumfang des Schaftabschnittes beispielsweise halb so viele Nocken vorhanden sind, als entsprechend ausgebildete Rastausnehmungen in dem ersten oder zweiten Bauteil. Durch eine derartige Aufteilung von Nocken und zugehörigen Rastausnehmungen in dem ersten oder zweiten Bauteil greift jede Nocke in der erwähnten Einsetzstellung in eine Rastausnehmung. Durch Drehen des Halteelementes um einen vorbestimmten Winkel wird jede Nocke in eine weitere zugehörige Rastausnehmung versetzt.
Selbstverständlich sind auch andere Kombinationen von Nocken und Rastausnehmungen vorstellbar. So können sich die Anzahl an Nocken und Rastausnehmungen entsprechen, so daß beim Wechsel von der Öffnungs- in die Schließstellung jede Nocke in die Rastausnehmung des vorherigen oder nachgeordneten Nockens einrastet. Die axiale Vorfixierung des Halteelementes in einem der Bauteile und die Verdrehsicherung im vormontierten Zustand können auch konstruktiv getrennt ausgebildet werden. Zur Vorfixierung kann man am Halteelement einen Überstand ausbilden, der eine geometrische Hinterschneidung bzw. Klemmung in einem der Bauteile bewirkt, und zur Verdrehsicherung kann man zusätzlich die zuvor beschriebenen Nocken oder dergleichen vorsehen.

Ein sehr einfache Ausbildung ist dadurch bedingt, daß der Aufnahmeraum zu beiden Stirnseiten hin offen ist, jedoch an einer Stirnseite mit einem separaten Deckelteil verschließbar ist. Durch diese Ausbildung ist die Herstellung des Aufnahmeteils beispielsweise im Spritzgießverfahren unkompliziert und das Deckelteil muß nur dann eingesetzt werden, wenn eine Dichtheit gewünscht ist.

Selbstverständlich ist es aber auch denkbar, daß das Deckelteil einstückig oder einteilig mit dem Halteelement ausgebildet ist. Entsprechende Bauarten können bereits beispielsweise im Spritzgießverfahren hergestellt werden.

Um beiderseits eine Dichtheit zu erzielen, ist vorteilhafterweise am Kopfabschnitt eine umlaufende Dichtungslippe vorgesehen.

Wie bereits erwähnt, ist es sehr vorteilhaft, daß der Aufnahmehohlraum zur Befestigung eines Rastclips ausgebildet ist, der als zweites Befestigungselement dient. Derartige Rastclipse sind an sich in vielfältiger Ausbildung bekannt. Damit können bekannte Rastclipse bei der Erfindung in erstmaliger neuer Verwendung eingesetzt werden, nämlich in einem durch das neuartige Drehschnellverbindungselement geschaffenen Befestigungspunkt.

Ein vorteilhafter Kraftverlauf ist dann vorhanden, wenn die Achse des Halteelementes und die Achse des zweiten Befestigungselementes koaxial verlaufen.

Optimalerweise ist das zweite Befestigungselement zur Einführung in einen am weiteren Bauteil befestigten oder daran angeformten Retainer ausgebildet, wie er an sich bekannt ist. Durch eine derartige Ausbildung ist ein Toleranzausgleich in der Ebene des weiteren Bauteils erzielbar.

Ein sehr kostengünstiges und einfach herzustellendes Halteelement ist als einteiliges Kunststofformteil ausgebildet. Vorteilhafterweise ist dieses Halteelement mit den Klemmvorsprüngen und den Nocken wie auch der Dichtungslippe als Spritzgießteil ausgebildet. Gegebenenfalls kann das Halteelement auch als zwei- oder mehrteiliges Kunststoff-Formteil ausgebildet sein.

In einer günstigen Ausgestaltung ist das Halteelement als Zweikomponenten-Spritzgußteil realisiert. Beispielsweise kann der Grundkörper aus POM (Polyoxymethylen) spritzgegossen werden, und darauf eine Weichkomponente aus TPE (thermoplastischer Elastomer) aufgespritzt werden, um damit die Dichtungslippe auszubilden.

Eine weitere vorteilhafte Ausgestaltung besteht darin, am Kopfabschnitt des Halteelementes im Bereich des Aufnahmehohlraums eine Ausnehmung und am zweiten Befestigungselement einen dazu passenden Vorsprung oder umgekehrt auszubilden. Die Ausnehmung und der Vorsprung sind dabei so aufeinander abzustimmen, daß die zweiten Befestigungselemente des weiteren Bauteils, d.h. zum Beispiel einer Dekorträgerschale, nur dann in die zugehörigen Aufnahmehohlräume der Halteelemente eingeführt werden können, wenn die Halteelemente sich jeweils in ihrer verriegelten Position befinden. Damit wird sozusagen eine Kodierung für die ordnungsgemäße Verriegelungsposition der Halteelemente erreicht.

### Kurze Beschreibung der Zeichnungen

Im folgenden ist zur weiteren Erläuterung und zum besseren Verständnis ein Ausführungsbeispiel der Erfindung unter Bezugnahme auf die beigefügten Zeichnungen näher beschrieben und erläutert. Es zeigt:
- Fig. 1: eine perspektivische Ansicht eines Schnellverschluß-Halteelementes,
- Fig. 2: eine weitere perspektivische Ansicht des Schnellverschluß-Halteelementes von Fig. 1,
- Fig. 3: eine Seitenansicht des Schnellverschluß-Halteelementes gemäß den Fig. 1 und 2,
- Fig. 4: einen Querschnitt eines in ein erstes und zweites Bauteil eingesetztes Schnellverschluß-Halteelement mit darin eingedrücktem Rastclip, an dem wiederum ein weiteres Bauteil mittels eines Retainers angebracht ist,
- Fig. 5: eine Draufsicht auf ein erstes Bauteil mit darin eingestecktem Schnellverschluß-Halteelement, sowohl in einer ersten Eindrückstellung und einer zweiten Klemmstellung,
- Fig. 6: zu den Darstellungen gemäß der Fig. 5 zugehörige perspektivische Ansichten und
- Fig. 7: eine perspektivische Ansicht eines zweiten Bauteils mit darin vorhandener Durchgangsbohrung, in der Rastausnehmungen ausgebildet sind.

### Beschreibung eines bevorzugten Ausführungsbeispiels der Erfindung

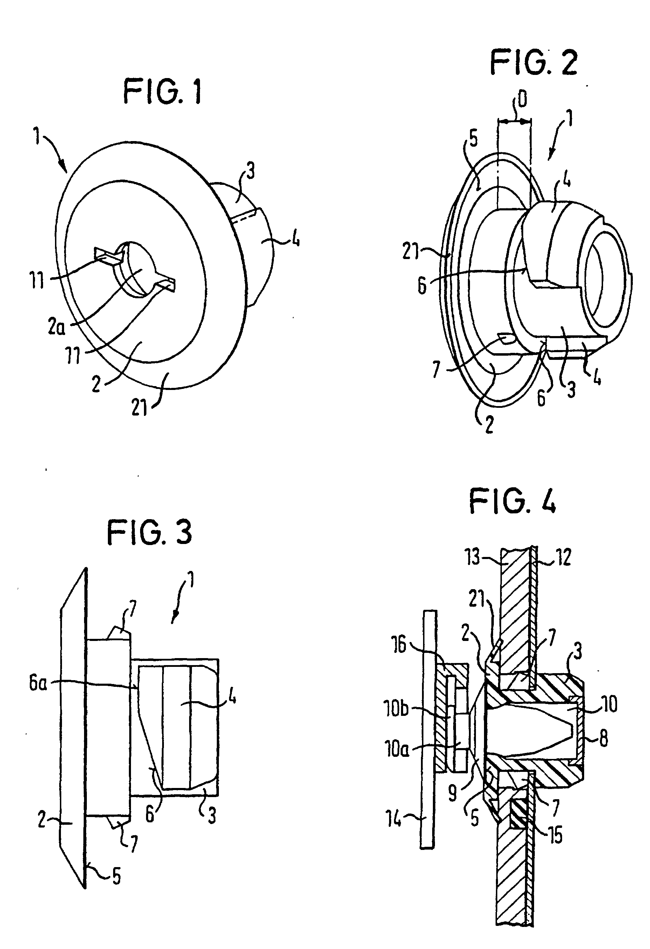

Wie aus den Fig. 1 bis 3 ersichtlich ist, besteht ein Halteelement 1 grundsätzlich aus einem Kopfabschnitt 2 und einem Schaftabschnitt 3. Der Kopfabschnitt 2 hat einen größeren Außendurchmesser als der Schaftabschnitt 3 und ist umfangsseitig mit einer umlaufenden, flexiblen bzw. elastischen Dichtungslippe 21 ausgebildet. Wie insbesondere aus der Fig. 2 hervorgeht, besitzt der Kopfabschnitt 2 eine Anlagefläche 5, die zur Anlage an ein Bauteil 13, hier eine Aggregatträgerplatte, dient. Stirnseitig, vom Schaftabschnitt 3 abgewandt, weist der Kopfabschnitt 2 ein Loch 2a auf, das mit einem Aufnahmeraum 10 im Schaftabschnitt 3 verbunden ist. Außerdem ist das Loch 2a mit einander gegenüberliegenden Schlitzen 11 ausgebildet, die zur Aufnahme eines Schraubenziehers oder eines entsprechend ausgebildeten Werkzeuges dienen. Anstatt der Schlitze 11 ist aber auch eine andere Formgebung , z.B. ein Sechskant, zweckmäßig, solange damit das Verdrehen des Halteelementes durch einen Monteur möglich ist. Im Falle einer Sechskant-Formgebung oder dergleichen ist es zweckmäßig, eine zusätzliche Kodierung als optische Verriegelungskontrolle bzw. als geometrische Sperre gegen das Einführen eines zweiten Befestigungselementes - hier des Rastclips 9 - in ein unverriegeltes Halteelement 1 vorzusehen.

Der Schaftabschnitt 3 ist außenumfangsseitig mit zwei Klemmvorsprüngen 4 ausgebildet, die jeweils eine ansteigende oder geneigte Anlageflanke 6 besitzen. Die Neigung der Anlageflanken 6 der Klemmvorsprünge 4 steigt zur Anlagefläche 5 des Kopfabschnittes 2 hin an. Das heißt, der Abstand zwischen der Anlagefläche 5 und den Anlageflanken 6 verringert sich zunehmend bis auf einen minimalen Abstand D, der geringfügig kleiner ist als die Gesamtdicke der miteinander zu verbindenden Bauteile 12 und 13, also dem Türinnenblech 12 und dem Aggregateträgerteil 13, unter Berücksichtigung einer Dichtung 15.

An die geneigte Anlageflanke 6 schließt sich ein keine Steigung aufweisender bzw. ebener Anlageabschnitt 6a an. Der Abstand zwischen der Anlagefläche 5 des Kopfteiles 2 und den ebenen Anlageflanken 6a der Klemmvorsprünge 4 ist konstant und stellt eine Klemmung der Bauteile 12, 13 sicher.

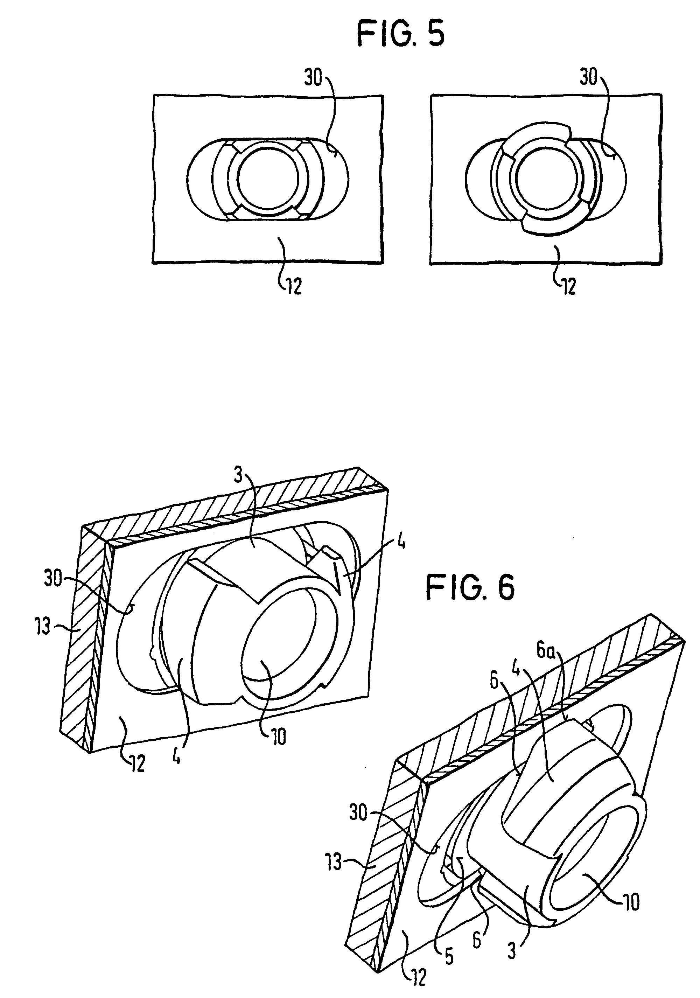

Wie insbesondere aus den Fig. 5 und 6 hervorgeht, sind die Vorsprünge 4 derart geformt, daß sie durch ein Langloch 30 im Aggregateträger 13 hindurchführbar sind. Es muß aber kein Langloch 30 vorhanden sein, sondern es genügt auch ein Durchgangsloch mit Übermaß, das zum einen ein Durchstecken der Klemmvorsprünge 4 erlaubt, jedoch bei verdrehten Vorsprüngen 4 das Hintergreifen des Bauteils 13 zuläßt.

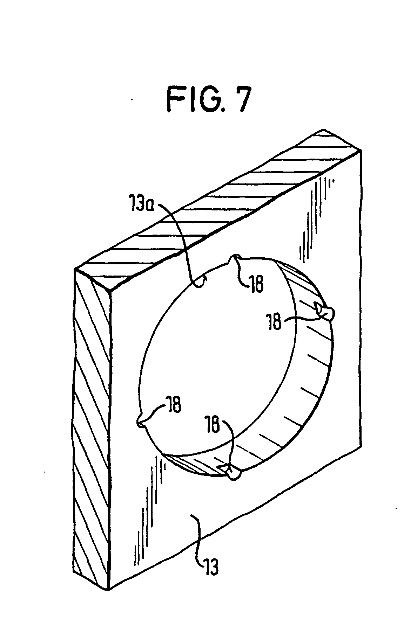

Schließlich sind noch mehrere Nocken 7 an einem Halsteil des Schaftabschnittes 3 des Halteelementes 1 umfangsseitig beabstandet vorhanden. Bei der in den Figuren gezeigten Ausführungsform sind zwei Nocken vorhanden. Diese Nocken 7 gelangen mit Rastausnehmungen 18 im Aggregateträger 13 in Eingriff, siehe hierzu Fig. 7.

Aus der Querschnittsdarstellung gemäß der Fig. 4 ist die Ausbildung des Aufnahmehohlraumes 10 im Schaftabschnitt 3 des Halteelementes 1 gut erkennbar. Dieser Aufnahmehohlraum 10 verengt sich zum Kopfteil hin, so daß ein Rastclip 9 herkömmlicher Bauart hierin einclipsbar ist. Stirnseitig ist der Aufnahmehohlraum 10 mit einem separaten Deckelteil 8, das mit einem entsprechend ausgebildeten Bund versehen ist, abgedichtet. Es ist aber selbstverständlich auch möglich, das Deckelteil 8 und den Schaftabschnitt 3 einteilig auszubilden.

Der in der Fig. 4 gezeigte handelsübliche Rastclip 9 weist einen Hals 10a auf, an den sich ein Einführteil 10b anschließt. Das Halsteil 10a und das Anlageteil 10b sind in einen Retainer 16 einführbar. Der Retainer 16 entspricht beispielsweise einem Oberteil, wie es in der DE 195 04 692 A1 offenbart ist. Dieser Retainer 16 ist an einer Dekorträgerschale bzw. Innenverkleidungsschale 14, die den Aggregateträger 13 überdeckt und den Türaufbau zum Fahrzeuginnenraum hin abschließt, angeformt und hieran befestigt.

Das Türinnenblech 12 und der Aggregateträger 13 sind durch eine umlaufende Dichtung 15 zueinander abgedichtet.

Anhand der Fig. 4 und den Fig. 5 bis 7 wird nun die Befestigung der Teile 12, 13 wie auch der Dekorträgerschale bzw. Innenverkleidungsschale 14 einer Kraftfahrzeugtür erläutert.

Im Aggregateträger 13, an dem mehrere Funktionseinheiten, wie Fensterheber, Schloß, Kabelbaum oder dergleichen, montiert sind, sind mehrere Durchgangsbohrungen 13a vorhanden, die jeweils einen Durchmesser haben, der größer ist als der Außendurchmesser der Vorsprünge 4. Die Nocken 7 haben dabei einen größeren Außendurchmesser als die Klemmvorsprünge 4. Durch das Eindrücken des Halteelementes 1 in die Durchgangsbohrung 13a des Aggregateträgers 13 ist eine erste Vorfixierung des Halteelementes 1 am Aggregateträger erzielbar, indem die Nocken 7 in zwei gegenüberliegende Rastausnehmungen 18 in der Durchgangsbohrung 13a einrasten. Dies kann durch Verdrehen des Halteelementes 1 mittels eines Schraubenziehers, der in die Schlitze 11 eingesteckt wird, erzielt werden. Im Türblech 12 sind entsprechend den Durchgangsbohrungen 13 plazierte Langlöcher 30 vorhanden. Diese Langlöcher 30 können aber auch jeweils als Loch mit gewissem Durchmesserübermaß ausgebildet sein. Durch die Langlochausbildung bzw. durch die Durchmesserübermaßausbildung können Fertigungstoleranzen beim Lochabstand zwischen dem Aggregateträger 13 und dem Türinnenblech 12 ausgeglichen werden. In der Öffnungs-Raststellung kann das Schnellverschluß-Halteelement 1 durch das Langloch 30 im Türinnenblech 12 hindurchgeführt werden. Dabei bewirkt das Halteelement 1 eine Vorfixierung des Aggregateträgers 13 am Türinnenblech 12, was die Montage äußerst erleichtert.

Durch Drehen des Halteelementes 1 in seine Schließ-Raststellung (diese wird durch die zwei weiteren Rastausnehmungen 18 geschaffen) werden der Aggregateträger 13 und das Türinnenblech 12 aneinandergepreßt. Die Klemmung erfolgt durch die schiefen Ebenen bzw. Anlageflanken 6 der Klemmvorsprünge 4, die einen Spannweg, hier ca. 3 mm, in axialer Richtung des Halteelementes 1 übertragen. Das Türinnenblech 12 und der Aggregateträger 13 werden bei der Drehung des Halteelementes 1, hier um 110°, zwischen der Anlagefläche 5 des Kopfteils 2 und den ebenen Flankenflächen 6a geklemmt. Diese Anordnung verhindert ein Losdrehmoment auf das Halteelement 1. Dieser Drehvorgang wird wiederum mittels eines Schraubenziehers, der in die Schlitze 11 am Kopfteil 2 eingesetzt wird, durchgeführt. Es ist auch hervorzuheben, daß für den Monteur die Stellung der Schlitze 11 die Öffnungs- oder Schließstellung des Halteelementes 1 anzeigt, so daß eine optische Verriegelungskontrolle gegeben ist.

Beim Verdrehen des Halteelementes von der Öffnungs- in die Schließstellung dichtet die Dichtungslippe 21 die Bohrung 13a im Aggregateträger 13 ab. Gleichzeitig gleicht die nach Art einer Tellerfeder ausgebildete Dichtungslippe 21 das Setzverhalten und die Fertigungstoleranzen in Richtung senkrecht zur Plattenebene des Aggregateträgers 13 bzw. des Türinnenbleches 12 aus.

Sobald durch mehrere Schnappverschluß-Halteelemente 1 der Aggregateträger 13 am Türinnenblech 12 fixiert ist, werden Rastclipse 9 in die Aufnahmehohlräume 10 eingedrückt und hieran die mit den Retainern 16 ausgebildete Dekorträgerschale 14 eingehängt.

Durch die schwimmende Befestigung der Dekorträgerschale 14 über die Retainer an den Rastclipsen 9 ist ein Toleranzausgleich in der Ebene der Dekorträgerschale 14 möglich.

Dadurch, daß das Deckelteil 8 des Halteelements 1 in sich geschlossen ist, kann es grundsätzlich auch ohne Rastclip 9 verwendet werden. Bei einem Schnellverschluß-Halteelement 1 ohne Deckelausbildung müßte ansonsten immer eine Abdichtung durch den Rastclip 9 erfolgen.

## Patentansprüche

1. Drehschnellverschluß zum miteinander Verbinden mehrerer Bauteile (12, 13, 14), insbesondere eines Kraftfahrzeug-Türinnenblechs (12) und eines Aggregateträgers (13) mit einer Dekorträgerschale (14), der als verdrehbares Halteelement (1) ausgebildet ist, das einen Kopf- (2) und einen Schaftabschnitt (3) umfaßt, wobei
- an dem Schaftaußenumfang des Schaftabschnitts (3) zumindest ein Klemmvorsprung (4) vorhanden ist, der eine dem Kopfabschnitt (2) zugewandte Anlageflanke (6) zur Anlage an ein erstes Bauteil (12) besitzt, die gegenüber der Schaftachse zumindest über einen Teilbereich geneigt ist,
- der Kopfabschnitt (2) eine Anlagefläche (5) zur Anlage an das erste (12) oder ein zweites Bauteil (13) besitzt, die der Anlageflanke (6) des Klemmvorsprungs (4) zugewandt ist, und
- das erste (12) oder das erste (12) und das zweite Bauteil (13) zwischen der Anlageflanke (6) des Klemmvorsprungs (4) und der Anlagefläche (5) des Kopfabschnitts (2) durch Drehung des Halteelements (1) einklemmbar sind;
**dadurch gekennzeichnet, dass**
- das Halteelement (1) zur Befestigung eines zweiten Befestigungselements (9) ausgebildet ist, an dem ein weiteres Bauteil (14) befestigbar ist und im Halteelement (1) ein Aufnahmehohlraum (10) vorhanden ist, der zur Aufnahme und Halterung des zweiten Befestigungselements (9) geformt ist.

2. Drehschnellverschluß nach Anspruch 1, **dadurch gekennzeichnet, daß** zwei einander gegenüberliegende Klemmvorsprünge (4) am Schaftabschnitt (3) vorhanden sind.

3. Drehschnellverschluß nach Anspruch 1 oder 2, **dadurch gekennzeichnet, daß** jeder Klemmvorsprung einen eine Steigung zwischen 1° und 45° aufweisenden, geneigten Flankenbereich (6) und einen ebenen, keine Steigung aufweisenden Flankenbereich (6a) besitzt.

4. Drehschnellverschluß nach Anspruch 1, **dadurch gekennzeichnet, daß** am Schaftaußenumfang des Schaftabschnitts (3) ein oder mehrere Nocken (7) vorhanden sind, die in entsprechend ausgebildete Rastausnehmungen (18) in dem ersten oder zweiten Bauteil (12, 13) passen.

5. Drehschnellverschluß nach Anspruch 4, **dadurch gekennzeichnet, daß** am Schaftaußenumfang des Schaftabschnitts (3) halb so viele Nocken (7) vorhanden sind als entsprechend ausgebildete Rastausnehmungen (18) in dem ersten oder zweiten Bauteil (12, 13).

6. Drehschnellverschluß nach Anspruch 1, **dadurch gekennzeichnet, daß** der Aufnahmehohlraum (10) beiderseits offen ist und an einer Stirnseite mit einem separaten Deckelteil (8) verschließbar ist.

7. Drehschnellverschluß nach Anspruch 1, **dadurch gekennzeichnet, daß** der Aufnahmehohlraum (10) nur an einer Stirnseite offen ist und auf der anderen Stirnseite durch ein einstückig ausgebildetes Deckelteil verschlossen ist.

8. Drehschnellverschluß nach Anspruch 1 oder 2, **dadurch gekennzeichnet, daß** der Kopfabschnitt (2) mit einer umlaufenden Dichtungslippe (21) versehen ist, die mit dem ersten (12) oder zweiten Bauteil (13) in Anlage bringbar ist.

9. Drehschnellverschluß nach Anspruch 1, **dadurch gekennzeichnet, daß** der Aufnahmehohlraum (10) zur Befestigung eines Rastclips (9) ausgebildet ist, der als zweites Befestigungselement dient.

10. Drehschnellverschluß nach Anspruch 1 oder 9, **dadurch gekennzeichnet, daß** die Achse des Halteelements (1) und des zweiten Befestigungselements (9) koaxial verlaufen.

11. Drehschnellverschluß nach Anspruch 1 oder 10, **dadurch gekennzeichnet, daß** das zweite Befestigungselement (9) mit dem Halteelement (1) einstückig ausgebildet ist.

12. Drehschnellverschluß nach Anspruch 1 oder 11, **dadurch gekennzeichnet, daß** das zweite Befestigungselement (9) zum Einführen in einen am weiteren Bauteil (14) befestigten oder daran angeformten Retainer (16) ausgebildet ist.

13. Drehschnellverschluß nach einem der vorhergehenden Ansprüche, **dadurch gekennzeichnet, daß** das Halteelelement (1) als einteiliges Kunststoffformteil (1) ausgebildet ist.

14. Drehschnellverschluß nach Anspruch 13, **dadurch gekennzeichnet, daß** das Halteelement (1) ein Spritzgießteil ist.

## Claims

1. Rotary quick-action locking device for joining a plurality of components (12, 13, 14) to one another, in particular an interior metal sheet (12) of a motor vehicle door and a unit support (13) to a decorative support shell (14) which is constructed as a twistable retaining member (1) comprising a head section (2) and a shaft section (3), wherein
- on the shaft outer circumference of the shaft section (3) at least one clamping projection (4) is present which possesses a contact flank (6) facing towards the head section (2) for resting against a first component (12) which is inclined with respect to the axis of the shaft at least over part of its area,
- the head section (2) possesses a contact surface (5) for resting against the first (12) or a second component (13) which faces towards the contact flank (6) of the clamping projection (4), and
- the first (12) or the first (12) and the second component (13) are pinchable between the contact flank (6) of the clamping projection (4) and the contact surface (5) of the head section (2) by turning the retaining member (1),
**characterized in that**
- the retaining member (1) is constructed for fastening a second fastening member (9) to which another component (14) is fastenable and in the retaining member (1) a receiving cavity (10) is present which is shaped for accommodating and fixing the second fastening member (9).

2. Rotary quick-action locking device according to Claim 1, **characterized in that** two clamping projections (4) located opposite one another are present on the shaft section (3).

3. Rotary quick-action locking device according to Claim 1 or 2, **characterized in that** each clamping projection possesses an inclined flank region (6) having a gradient between 1° and 45° and a level flank region (6a) exhibiting no gradient.

4. Rotary quick-action locking device according to Claim 1, **characterized in that** on the shaft outer circumference of the shaft section (3) one or more cams (7) are present which fit into locking recesses (18) of corresponding construction in the first or second component (12, 13).

5. Rotary quick-action locking device according to Claim 4, **characterized in that** on the shaft outer circumference of the shaft section (3) there is half as much cam (7) present as correspondingly constructed locking recesses (18) in the first or second component (12, 13).

6. Rotary quick-action locking device according to Claim 1, **characterized in that** the receiving cavity (10) is open on both sides and is sealable at one end face by a separate covering part (8).

7. Rotary quick-action locking device according to Claim 1, **characterized in that** the receiving cavity (10) is open on only end face and is sealed on the other end face by a covering part constructed in one piece.

8. Rotary quick-action locking device according to Claim 1 or 2, **characterized in that** the head section (2) is provided with an all-round sealing lip (21) which can be brought into resting contact with the first (12) or second component (13).

9. Rotary quick-action locking device according to Claim 1, **characterized in that** the receiving cavity (10) is constructed for fastening a locking clip (9) which serves as the second fastening member.

10. Rotary quick-action locking device according to Claim 1 or 9, **characterized in that** the axis of the retaining member (1) and of the second fastening member (9) run coaxially.

11. Rotary quick-action locking device according to Claim 1 or 10, **characterized in that** the second fastening member (9) together with the retaining member (1) is constructed in one piece.

12. Rotary quick-action locking device according to Claim 1 or 11, **characterized in that** the second fastening member (9) is constructed for guiding into a retainer (16) fastened on the further component (14) or formed thereon.

13. Rotary quick-action locking device according to one of the preceding claims, **characterized in that** the retaining member (1) is constructed as a one-piece plastic moulding (1).

14. Rotary quick-action locking device according to Claim 13, **characterized in that** the retaining member (1) is an injection-moulded part.

## Revendications

1. Système de blocage rapide par rotation destiné à assembler plusieurs pièces (12, 13, 14), en particulier une tôle intérieure de porte (12) dans un véhicule et un support de pièces (13) avec une coque de support décorative (14), lequel est conçu sous forme d'élément de retenue (1), muni d'une tête (2) et d'une tige (3), sachant que
- sur la périphérie extérieure de la tige (3), il est prévu au moins une saillie de blocage (4), qui comporte un flanc d'appui (6) orienté vers la tête (2), sur lequel vient en appui une première pièce (12) et qui, au moins sur une zone partielle, est incliné par rapport à l'axe de la tige,
- la tête (2) comporte une surface de contact (5), qui est destinée à servir d'appui à la première pièce (12) ou à une deuxième pièce (13) et qui est orientée vers le flanc d'appui (6) de la saillie de blocage (4), et
- la première pièce (12) ou la première (12) et la deuxième pièce (13) peuvent être bloquées entre le flanc d'appui (6) de la saillie de blocage (4) et la surface de contact (5) de la tête (2) par la rotation de l'élément de retenue (1),
**caractérisé en ce que**
- l'élément de retenue (1) est conçu pour la fixation d'un deuxième élément de fixation (9), contre lequel peut être fixée une autre pièce (14), et une cavité de réception (10) est réalisée dans l'élément de retenue (1), laquelle est formée pour recevoir et maintenir le deuxième élément de fixation (9).

2. Système de blocage rapide par rotation selon la revendication 1, **caractérisé en ce que** la tige (3) comporte deux saillies de blocage (4) opposées l'une à l'autre.

3. Système de blocage rapide par rotation selon la revendication 1 ou 2, **caractérisé en ce que** chaque saillie de blocage comporte une zone de flanc inclinée (6) avec une pente comprise entre 1° et 45° et une deuxième zone de flanc plane (6a) sans inclinaison.

4. Système de blocage rapide par rotation selon la revendication 1, **caractérisé en ce que** la tige (3) comporte sur la périphérie extérieure un ou plusieurs ergots (7), qui s'ajustent dans des évidements de blocage (18) de forme correspondante, réalisés dans la première ou la deuxième pièce (12, 13).

5. Système de blocage rapide par rotation selon la revendication 4, **caractérisé en ce que** la tige (3) comporte sur la périphérie extérieure des ergots (7), dont le nombre est égal à la moitié des évidements de blocage (18) de forme correspondante, réalisés dans la première ou la deuxième pièce (12, 13).

6. Système de blocage rapide par rotation selon la revendication 1, **caractérisé en ce que** la cavité de réception (10) est ouverte sur les deux côtés et peut être fermée sur une face frontale par un couvercle (8) séparé.

7. Système de blocage rapide par rotation selon la revendication 1, **caractérisé en ce que** la cavité de réception (10) est ouverte seulement sur une face frontale et est fermée sur l'autre face frontale par un couvercle conçu d'une seule pièce.

8. Système de blocage rapide par rotation selon la revendication 1 ou 2, **caractérisé en ce que** la tête (2) est munie d'une lèvre d'étanchéité (21) périphérique, qui peut être amenée en appui contre la première (12) ou la deuxième pièce (13).

9. Système de blocage rapide par rotation selon la revendication 1, **caractérisé en ce que** la cavité de réception (10) est conçue pour la fixation d'un clip de blocage (9), qui fait fonction de deuxième élément de fixation.

10. Système de blocage rapide par rotation selon la revendication 1 ou 9, **caractérisé en ce que** l'axe de l'élément de retenue (1) et du deuxième élément de fixation (9) s'étendent coaxialement.

11. Système de blocage rapide par rotation selon la revendication 1 ou 10, **caractérisé en ce que** le deuxième élément de fixation (9) est formé d'une seule pièce avec l'élément de retenue (1).

12. Système de blocage rapide par rotation selon la revendication 1 ou 11, **caractérisé en ce que** le deuxième élément de fixation (9) est destiné à être introduit dans une fixation (16) fixée contre l'autre pièce (14) ou moulée contre celle-ci.

13. Système de blocage rapide par rotation selon une des revendications précédentes, **caractérisé en ce que** l'élément de retenue (1) est conçu sous forme de pièce moulée (1) monobloc en matière plastique.

14. Système de blocage rapide par rotation selon la revendication 13, **caractérisé en ce que** l'élément de retenue (1) est une pièce moulée par injection.
